# EUROPEAN PATENT SPECIFICATION

(11) **EP 2 134 937 B1**
(45) Date of publication and mention of the grant of the patent: **29.08.2018**
(21) Application number: 08704994.6
(22) Date of filing: 29.01.2008
(51) Int. Cl.: F16L 55/033, F16L 55/027, F04C 29/06

(54) **SILENCER FOR PNEUMATIC DEVICE**
SCHALLDÄMPFER FÜR DRUCKLUFTVORRICHTUNG
SILENCIEUX DESTINÉ UN DISPOSITIF PNEUMATIQUE

(30) Priority: 08.03.2007 KR 20070022787
(43) Date of publication of application: 23.12.2009
(73) Proprietor: Korea Pneumatic System Co., Ltd, Seoul 153-030 (KR)
(72) Inventor: CHO, Ho-Young, Gyeonggi-do 423-826 (KR)
(74) Representative: Cabinet Chaillot
(86) International application number: PCT/KR2008/000528
(87) International publication number: WO 2008/108538

(56) References cited:
- EP-B1- 1 461 513
- WO-A1-2006/075670
- JP-A- 05 332 121
- KR-B1- 100 301 865
- US-A- 3 561 561
- US-A- 4 033 428
- US-A- 4 134 472
- US-A- 4 683 978
- US-A- 5 109 950
- US-A- 6 089 348

## Description

### Technical Field

The present invention relates to a silencer, which is coupled to an outlet of a pneumatic device, which is actuated using compressed air, so as to reduce noise.

### Background Art

Generally, the term 'pneumatic device' is a general term for devices that are actuated using compressed air as drive force, for example, including a vacuum pump, a vacuum cylinder, a vacuum conveyor, a vacuum motor, etc. The above-mentioned devices have an air inlet and an air outlet therein. In such a pneumatic device, because excessive noise is generated when compressed air passes through the pneumatic device and is exhausted outside through the outlet, a silencer for reducing noise is required.

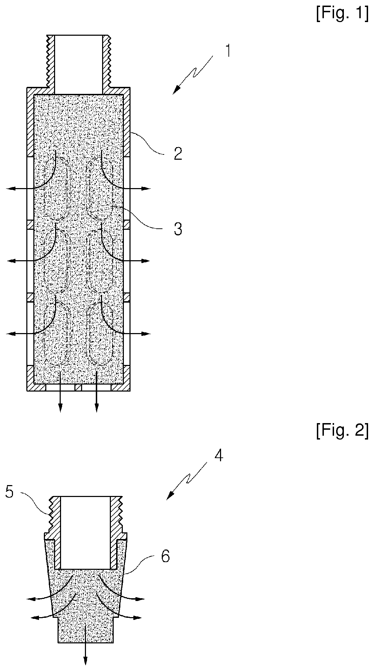

FIGS. 1 and 2 illustrate conventional silencers. The silencer 1 of FIG. 1 includes a cylindrical body 2, which has a plurality of through holes in the sidewall thereof, and a porous acoustical absorbent 3, which is charged into the cylindrical body 2. An open end of the cylindrical body 2 is coupled to an outlet of a pneumatic device. The silencer 4 of FIG. 2 includes a coupling fitting 5, and an acoustical absorbent 6, which is fastened to the fitting 5. The fitting 5 is coupled to an outlet of a pneumatic device.

In these silencers, compressed air, which is output from the pneumatic device, is exhausted outside the silencer via the acoustical absorbent 3, 6 (refer to the arrows). In this process, a noise source is absorbed by the acoustical absorbent 3, 6, so that the generation of noise is reduced. However, the conventional silencers 1 and 4 are problematic in that an excessive amount of acoustical absorbent 3, 6 is required, and in that, despite the use of an excessive amount of acoustical absorbent, because the distance that noise passes through the acoustical absorbent 3, 6 is relatively short, the noise absorption effect is unsatisfactory. Furthermore, the use of the acoustical absorbent 3, 6 induces an increase in exhaust pressure, but the conventional techniques have no means of mitigating this problem.

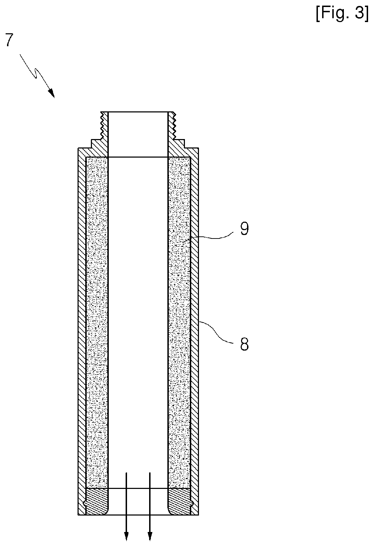

FIG. 3 illustrates a silencer 7, which was proposed recently. The silencer 7 includes a pipe-shaped body 8, and a cylindrical acoustical absorbent 9, which is provided on the inner surface of the body 8. The silencer 7 has an advantage in that the amount of acoustical absorbent 9 that is used can be reduced compared to that of the prior silencer 1 or 4. However, a relatively large portion of noise is directly exhausted outside the silencer rather than being absorbed by the acoustical absorbent 9 (see the arrows). Therefore, there is a problem in that the noise absorption effect is very low. EP 1 461 513 B1 discloses a silencer comprising an acoustical absorbent provided between an inner and outer casing.

### Disclosure of Invention

### Technical Problem

Accordingly, the present invention has been made keeping in mind the above probl ems occurring in the silencers according to the conventional techniques, and an object of the present invention is to provide a silencer which efficiently uses a relatively small amount of acoustical absorbent. Another object of the present invention is to provide a silencer in which the lengths of the contact surface of the acoustical absorbent and the air passage can be maximized in the limited length of the silencer. A further object of the present invention is to provide a silencer which can vary the direction in which air is exhausted outside the silencer.

### Technical Solution

In order to accomplish the above objects, the present invention provides a silencer for a pneumatic device, including: an inner casing open at a first end thereof and closed at a second end thereof, with transverse air guide means formed in the open end or the closed end of the inner casing, the air guide means communicating with an outlet of the pneumatic device; an outer casing provided coaxially around the inner casing such that a space for communicating with the air guide means is defined between the inner casing and the outer casing, with an exhaust hole formed in the outer casing at a position opposite the air guide means, the exhaust hole communicating with the space; and an acoustical absorbent provided in the space defined between the inner casing and the outer casing. The acoustical absorbent has a spiral shape.

With regard to the flow of air, compressed air, which is output from the pneumatic device, is guided into the space defined between the inner casing and the outer casing through the air guide means of the silencer and, thereafter, it passes through the acoustical absorbent and is exhausted outside the silencer through the exhaust hole. In this process, noise is absorbed by the acoustical absorbent, so that the generation of noise is markedly reduced.

In the silencer of the present invention, a relatively small amount of the acoustical absorbent is provided between the inner and outer casings, which form a coaxial double pipe structure. The acoustical absorbent is configured such that noise passes through the acoustical absorbent in the longitudinal direction, thus ensuring a superior noise absorption effect. Particularly, because the acoustical absorbent has a spiral shape, the length thereof is maximally extended, thus further increasing the noise absorption effect. Furthermore, because the acoustical absorbent defines a spiral passage, the exhaust pressure of compressed air is markedly reduced. Meanwhile, in the silencer of the present invention, which has the double pipe structure, the direction in which compressed air is finally exhausted outside the silencer can be changed by slightly rotating the outer casing.

### Advantageous Effects

The silencer according to the present invention includes an inner casing and an outer casing, which has a space therebetween, and an acoustical absorbent, which is provided in the space between the inner and outer casings. The acoustical absorbent is configured such that noise passes through the acoustical absorbent in the longitudinal direction, thus ensuring a superior noise absorption effect. Particularly, because the acoustical absorbent has a spiral shape, the length thereof is maximally extended, thus further increasing the noise absorption effect. Furthermore, because the acoustical absorbent defines a spiral passage, the exhaust pressure of compressed air is markedly reduced.

### Brief Description of the Drawings

FIGS. 1, 2 and 3 are sectional views showing several conventional silencers;
FIG. 4 is a perspective view of a silencer, according to a first embodiment of the present invention;
FIG. 5 is an exploded perspective view of FIG. 4;
FIG. 6 is a sectional view of FIG. 4;
FIG. 7 is a perspective view of a silencer, according to a second embodiment of the present invention; and
FIG. 8 is a view illustrating the operation of the silencer according to the present invention.

### <Description of the elements in the drawings>

10. silencer 11. inner casing
12. outer casing 15. hole
16,20. flange 18. space
19. exhaust hole 22. acoustical absorbent
23. vacuum ejector

### Best Mode for Carrying Out the Invention

The above and other objects, features and advantages of the present invention will be more clearly understood from the following detailed description, taken in conjunction with the accompanying drawings.

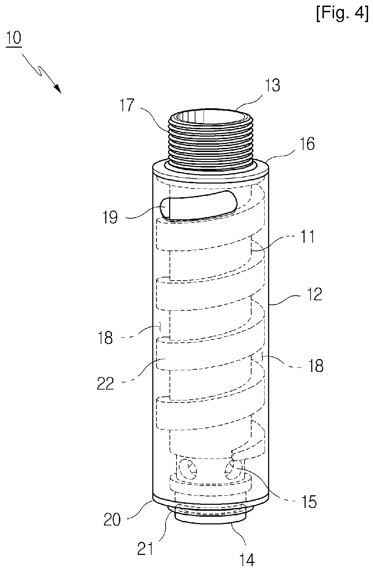

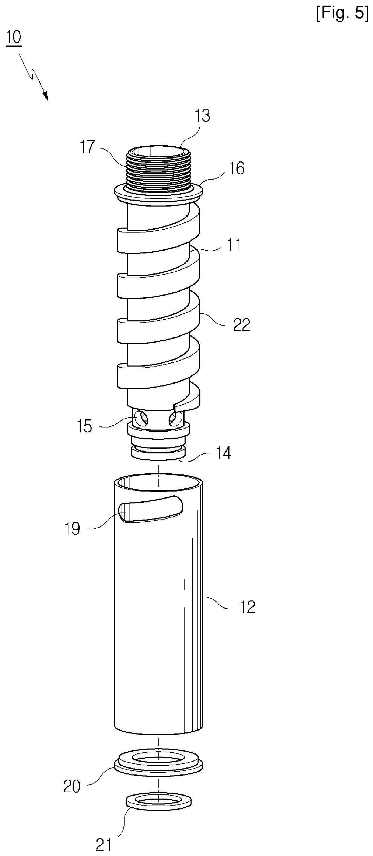

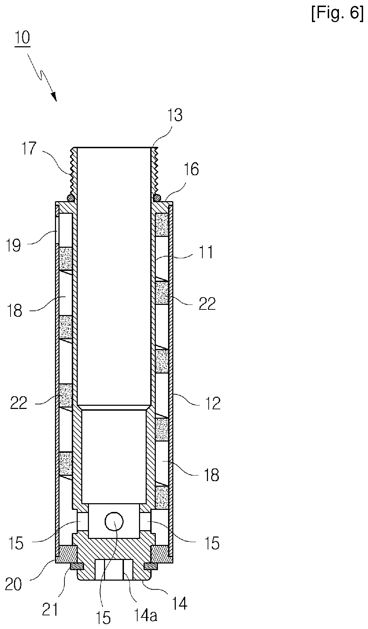

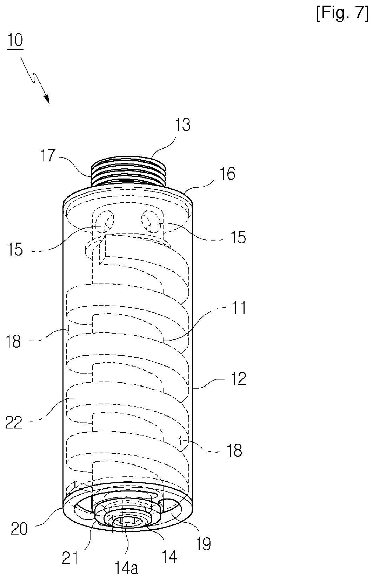

Referring to FIGS. 4 through 6, a silencer according to a first embodiment of the present invention is designated by the reference numeral 10. The silencer 10 includes an inner casing 11, which has a hollow structure, and an outer casing 12, which is coaxially provided around the inner casing 11, thus forming a double pipe structure. The inner casing 11 has a cylindrical shape, which is open at a first end 13 thereof and closed at a second end 14 thereof. Holes 15 serving as transverse air guide means are formed in the inner casing adjacent to the closed end 14. Preferably, at least two holes 15 are formed around the closed end 14. Meanwhile, as in the second embodiment of the present invention, air guide holes 15 may be formed around the open end 13 in the inner casing 11 (see, FIG. 7).

A flange 16 for supporting the outer casing 12, which is coaxially provided around the inner casing 11, and an external threaded part 17 for enabling the silencer 10 to be coupled to a pneumatic device are provided around the open end 13 of the inner casing 11. The external threaded part 17 is coupled to or separated from the pneumatic device by rotating a tool holding part 14a, which is provided on the closed end 14.

The outer casing 12 is coaxially provided around the inner casing 11 such that a space 18 is defined between the inner casing 11 and the outer casing 12 and communicates with the holes 15. Of course, the inner diameter of the outer casing 12 is greater than the outer diameter of the inner casing 11. An exhaust hole 19, which communicates with the space 18, is formed in a first end of the outer casing 12, which is opposite the air guide means 15. As in the second embodiment, the exhaust hole 19 may be formed in the flange 16 or 20 (see, FIG. 70).

The outer casing 12 is supported at the first end thereof by the flange 16 of the inner casing 11, and is supported at a second end thereof by the flange 20, which is provided around the closed end 14 of the inner casing 11. The flange 20 is supported by a retainer ring 21. Here, because the outer casing 12 is not completely fixed to the flanges 16 and 20, the orientation of the exhaust hole 19 may be varied by slightly rotating the outer casing 12.

An acoustical absorbent 22 is installed in the space 18 defined between the outer casing 12 and the inner casing 11. The acoustical absorbent 22 is made of material selected from among porous material, fibrous material and other well-known kinds of air-permeable material. Preferably, the acoustical absorbent 22 has a spiral shape, so that a spiral passage is defined in the space 18.

FIG. 7 shows that the positions of the holes 15 and the exhaust hole 19 can be varied from those of the first embodiment. The general construction and operation of the embodiment of FIG. 7, with the exception of the holes 15 and the exhaust hole 19, remains the same as the first embodiment, therefore the same reference numerals are used to designate the same or similar components as those of the first embodiment, and further explanation of this drawing is deemed unnecessary.

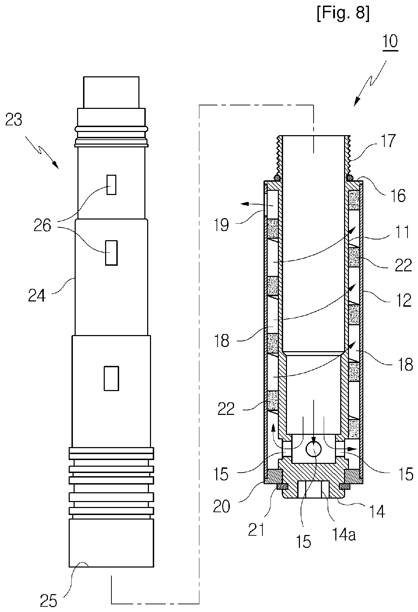

Referring to FIG. 8, the silencer 10 of the present invention may be coupled to a vacuum ejector 23, which is a kind of pneumatic device. The vacuum ejector 23 is a typical ejector, which includes a nozzle body 24, having a rotationally symmetrical structure, and through holes 26, which are formed through the sidewall of the nozzle body 24 to communicate the nozzle body 24 with an enclosure space (not shown). Here, the present invention is not limited to any special kind of pneumatic device or any particular structure thereof.

The vacuum ejector 23 is mounted to a device which must be exhausted, and is actuated using compressed air, which is drawn thereinto and is exhausted therefrom through an outlet 25 at a high speed, thus forming a negative pressure in the enclosure space. With regard to the flow of air (refer to the directions of the arrows), compressed air, which has passed through the vacuum ejector 23, passes through the air guide holes 15 and the space 18 of the silencer 10 of the present invention and is thereafter exhausted outside the silencer 10 through the exhaust hole 19.

At this time, noise generated by the ejector is absorbed by the acoustical absorbent 22 while passing through the silencer, so that the generation of noise is markedly reduced. Particularly, in the present invention, because the acoustical absorbent 22 has a spiral structure and thus forms a spiral passage, the length of the acoustical absorbent 22 is maximized, so that the noise reduction effect can be markedly enhanced. Furthermore, the present invention can solve the problem with the conventional silencer, in which exhaust pressure increases due to the use of the acoustical absorbent.

## Claims

1. A silencer (10) for a pneumatic device, comprising: an inner casing (11) opened at a first end (13) thereof and closed at a second end (14) thereof, with transverse air guide means (15) formed in the open end (13) or the closed end (14) of the inner casing (11), the air guide means (15) communicating with an outlet (25) in the pneumatic device (23); an outer casing (12) provided around the inner casing (11) coaxially such that a space (18) for communicating with the air guide means (15) is defined between the inner casing (11) and the outer casing (12), with an exhaust hole (19) formed in the outer casing (12) at a position opposite the air guide means (15), the exhaust hole (19) communicating with the space (18); and an acoustical absorbent (22) provided in the space (18) defined between the inner casing (11) and the outer casing (12), wherein the outer casing (12) is supported at opposite ends thereof by respective flanges (16, 20), which are provided around the open end (13) and the closed end (14) of the inner casing (11), respectively, and wherein the exhaust hole (19) is formed through a sidewall of the outer casing (12) or is formed in the flange (16 or 20) disposed opposite the air guide means (15), **characterised in that** the acoustical absorbent (22) has a spiral shape, so that the space (18) forms a spiral air-passage.

2. The silencer for the pneumatic device according to claim 1, wherein the air guide means (15) comprises at least one hole.

3. The silencer for the pneumatic device according to claim 1, wherein orientation of the exhaust hole (19) is changed by rotating the outer casing (12).

4. The silencer for the pneumatic device according to claim 1, wherein a tool holding part (14a) is provided on the closed end (14) of the inner casing (11), so that the silencer (10) is coupled to or removed from the pneumatic device (23) by rotating the tool holding part (14a).

## Patentansprüche

1. Schalldämpfer (10) für eine Druckluftvorrichtung, mit: einem Innengehäuse (11), das an einem ersten Ende (13) davon offen und an einem zweiten Ende (14) davon geschlossen ist, mit quer verlaufendem Luftführungsmittel (15), das in dem offenen Ende (13) oder dem geschlossenen Ende (14) des Innengehäuses (11) gebildet ist, das Luftführungsmittel (15) steht in Verbindung mit einem Auslass (25) in der Druckluftvorrichtung (23); einem Außengehäuse (12), das sich koaxial um das Innengehäuse (11) herum erstreckt, so dass ein Raum (18) zur Verbindung mit dem Luftführungsmittel (15) zwischen dem Innengehäuse (11) und dem Außengehäuse (12) definiert ist, mit einem Auslassloch (19), das in dem Außengehäuse (12) gebildet ist, an einer Stelle gegenüber dem Luftführungsmittel (15), wobei das Auslassloch (19) mit dem Raum (18) in Verbindung steht; und einer schalldämpfenden Abschirmung (22) in dem Raum (18) zwischen dem Innengehäuse (11) und dem Außengehäuse (12), wobei das Außengehäuse (12) an den gegenüberliegenden Enden davon von betreffenden Flanschen (16, 20) getragen wird, die um das offene Ende (13) bzw. das geschlossene Ende (14) bzw. das Innengehäuse (11) herum vorgesehen sind, und wobei das Auslassloch (19) durch eine Seitenwand des Außengehäuses (12) hindurch gebildet ist oder in dem Flansch (16 oder 20), der gegenüber dem Luftführungsmittel (15) angeordnet ist, **gekennzeichnet dadurch, dass** die schalldämpfende Abschirmung (22) Spiralform hat, so dass der Raum (18) einen spiralförmigen Luftdurchgang bildet.

2. Schalldämpfer für die Druckluftvorrichtung nach Anspruch 1, wobei das Luftführungsmittel (15) mindestens ein Loch umfasst.

3. Schalldämpfer für die Druckluftvorrichtung nach Anspruch 5, wobei die Ausrichtung des Auslasslochs (19) durch Rotieren des Außengehäuses (12) verändert wird.

4. Schalldämpfer für die Druckluftvorrichtung nach Anspruch 1, wobei ein Werkzeughalterteil (14a) auf dem geschlossenen Ende (14) des Innengehäuses (11) vorgesehen ist, so dass der Schalldämpfer (10) durch das Rotieren des Werkzeughalterteils (14a) mit der Druckluftvorrichtung (23) verbunden oder von ihr entfernt wird.

## Revendications

1. Silencieux (10) pour un dispositif pneumatique, comprenant : un boîtier interne (11) ouvert à une première extrémité (13) de celui-ci et fermé à une seconde extrémité (14) de celui-ci, avec des moyens de guidage d'air (15) transversaux formés dans l'extrémité ouverte (13) ou l'extrémité fermée (14) du boîtier interne (11), les moyens de guidage d'air (15) communiquant avec une sortie (25) dans le dispositif pneumatique (23) ; un boîtier externe (12) disposé coaxialement autour du boîtier interne (11) de telle sorte qu'un espace (18) pour communiquer avec les moyens de guidage d'air (15) est défini entre le boîtier interne (11) et le boîtier externe (12), avec un trou d'échappement (19) formé dans le boîtier externe (12) dans une position opposée aux moyens de guidage d'air (15), le trou d'échappement (19) communiquant avec l'espace (18) ; et un absorbant acoustique (22) disposé dans l'espace (18) défini entre le boîtier interne (11) et le boîtier externe (12), le boîtier externe (12) étant supporté au niveau d'extrémités opposées de celui-ci par des brides respectives (16, 20), qui sont situées autour de l'extrémité ouverte (13) et de l'extrémité fermée (14) du boîtier interne (11), respectivement, et le trou d'échappement (19) étant formé à travers une paroi latérale du boîtier externe (12) ou étant formé dans la bride (16 ou 20) disposée à l'opposé des moyens de guidage d'air (15), **caractérisé par le fait que** l'absorbant acoustique (22) a une forme de spirale, de telle sorte que l'espace (18) forme un passage d'air en spirale.

2. Silencieux pour le dispositif pneumatique selon la revendication 1, dans lequel les moyens de guidage d'air (15) comprennent au moins un trou.

3. Silencieux pour le dispositif pneumatique selon la revendication 5, dans lequel l'orientation du trou d'échappement (19) est changée par rotation du boîtier extérieur (12).

4. Silencieux pour le dispositif pneumatique selon la revendication 1, dans lequel une partie de maintien d'outil (14a) est disposée sur l'extrémité fermée (14) du boîtier interne (11), de telle sorte que le silencieux (10) est couplé au ou retiré du dispositif pneumatique (23) par rotation de la partie de maintien d'outil (14a).
